# EUROPEAN PATENT APPLICATION

(11) **EP 4 471 566 A1**
(43) Date of publication of application: **04.12.2024**
(21) Application number: 23766076.6
(22) Date of filing: 09.03.2023
(51) Int. Cl.: G06F 3/0488

(54) **SINGLE-HAND CONTROL METHOD AND CONTROL APPARATUS FOR TOUCH SCREEN, ELECTRONIC DEVICE, AND STORAGE MEDIUM**

(30) Priority: 10.03.2022 CN 202210235822
(71) Applicant: VIVO MOBILE COMMUNICATION CO., LTD., Dongguan, Guangdong 523863 (CN)
(72) Inventor: HU, Xiao, Dongguan, Guangdong 523863 (CN)
(74) Representative: Murgitroyd & Company
(86) International application number: PCT/CN2023/080419
(87) International publication number: WO 2023/169499

(57) **Abstract**

This application discloses a one-hand control method and apparatus for a touchscreen, an electronic device, and a storage medium, and pertains to the technical field of electronic device control. The one-hand control method for a touchscreen includes: receiving a first input from a hand of a user on a first touch region; and performing target processing on a target object in a target interface based on a processing parameter corresponding to an input parameter of the first input, where the input parameter includes an input parameter for a holding part of the hand.

## Description

### CROSS-REFERENCE TO RELATED APPLICATION

This application claims priority to Chinese Patent Application No. 202210235822.2, filed on March 10, 2022 and entitled "ONE-HAND CONTROL METHOD AND APPARATUS FOR TOUCHSCREEN, ELECTRONIC DEVICE, AND STORAGE MEDIUM", which is incorporated herein by reference in its entirety.

### TECHNICAL FIELD

This application pertains to the technical field of electronic device control, and in particular, to a one-hand control method and apparatus for a touchscreen, an electronic device, and a storage medium.

### BACKGROUND

In the prior art, screens of most mobile phones are designed in a large size to meet use requirements of a user. In a process of operating a large-size display screen with one hand, there is a display region that is difficult to touch for the user.

In the existing solutions, a gesture is usually used to scale down the screen for operation in a small screen. However, for a tap operation, an extra gesture is required to scale down the screen for display. This interrupts continuity of a mobile phone operation process of the user and causes a bad operating experience for the user.

### SUMMARY

Embodiments of this application aim to provide a one-hand control method and apparatus for a touchscreen, an electronic device, and a storage medium, so that a mobile phone screen can be scaled down automatically for display based on a requirement without an extra gesture.

According to a first aspect, an embodiment of this application provides a one-hand control method for a touchscreen, including: receiving a first input from a hand of a user on a first touch region; and performing target processing on a target object in a target interface based on a processing parameter corresponding to an input parameter of the first input, where the input parameter includes an input parameter for a holding part of the hand.

According to a second aspect, an embodiment of this application provides a one-hand control apparatus for a touchscreen, including: a receiving module, configured to receive a first input from a hand of a user on a first touch region; and an execution module, configured to perform target processing on a target object in a target interface based on a processing parameter corresponding to an input parameter of the first input, where the input parameter includes an input parameter for a holding part of the hand.

According to a third aspect, an embodiment of this application provides an electronic device, including a processor and a memory, where the memory stores a program or an instruction executable on the processor, and when the program or the instruction is executed by the processor, the steps of the method according to the first aspect are implemented.

According to a fourth aspect, an embodiment of this application provides a readable storage medium. The readable storage medium stores a program or an instruction, and when the program or the instruction is executed by a processor, the steps of the method according to the first aspect are implemented.

According to a fifth aspect, an embodiment of this application provides a chip. The chip includes a processor and a communications interface, where the communications interface is coupled to the processor, and the processor is configured to run a program or an instruction to implement the steps of the method according to the first aspect.

According to a sixth aspect, an embodiment of this application provides a computer program product. The program product is stored in a storage medium, and the program product is executed by at least one processor to implement the method according to the first aspect.

In the embodiments of this application, the first input from the hand of the user on the first touch region is received; and target processing is performed on the target object in the target interface based on the processing parameter corresponding to the input parameter of the first input, where the input parameter includes an input parameter for a holding part of the hand. In this way, the electronic device can automatically scale down the display interface for display based on an operation of the user without a special operation from the user, so that the user can easily touch a position that needs to be touched.

### BRIEF DESCRIPTION OF THE DRAWINGS

FIG. 1 is a schematic flowchart of a one-hand control method for a touchscreen according to an embodiment of this application;
FIG. 2 is a schematic diagram of a specific part of a palm of a user according to an embodiment of this application;
FIG. 3 is a first schematic diagram of a display interface of an electronic device according to an embodiment of this application;
FIG. 4 is a second schematic diagram of a display interface of an electronic device according to an embodiment of this application;
FIG. 5 is a third schematic diagram of a display interface of an electronic device according to an embodiment of this application;
FIG. 6 is a fourth schematic diagram of a display interface of an electronic device according to an embodiment of this application;
FIG. 7 is a fifth schematic diagram of a display interface of an electronic device according to an embodiment of this application;
FIG. 8 is a block diagram of a structure of a one-hand control apparatus for a touchscreen according to an embodiment of this application;
FIG. 9 is a block diagram of a structure of an electronic device according to an embodiment of this application; and
FIG. 10 is a schematic diagram of a hardware structure of an electronic device according to an embodiment of this application.

### DETAILED DESCRIPTION

The following clearly describes the technical solutions in the embodiments of this application with reference to the accompanying drawings in the embodiments of this application. Apparently, the described embodiments are some but not all of the embodiments of this application. All other embodiments obtained by a person of ordinary skill in the art based on the embodiments of this application shall fall within the protection scope of this application.

The terms "first", "second", and the like in this specification and claims of this application are used to distinguish between similar objects instead of describing a specific order or sequence. It should be understood that, the terms used in such a way are interchangeable in proper circumstances, so that the embodiments of this application can be implemented in an order other than the order illustrated or described herein. Objects classified by "first", "second", and the like are usually of a same type, and the number of objects is not limited. For example, there may be one or more first objects. In addition, in this specification and the claims, "and/or" represents at least one of connected objects, and a character "/" generally represents an "or" relationship between associated objects.

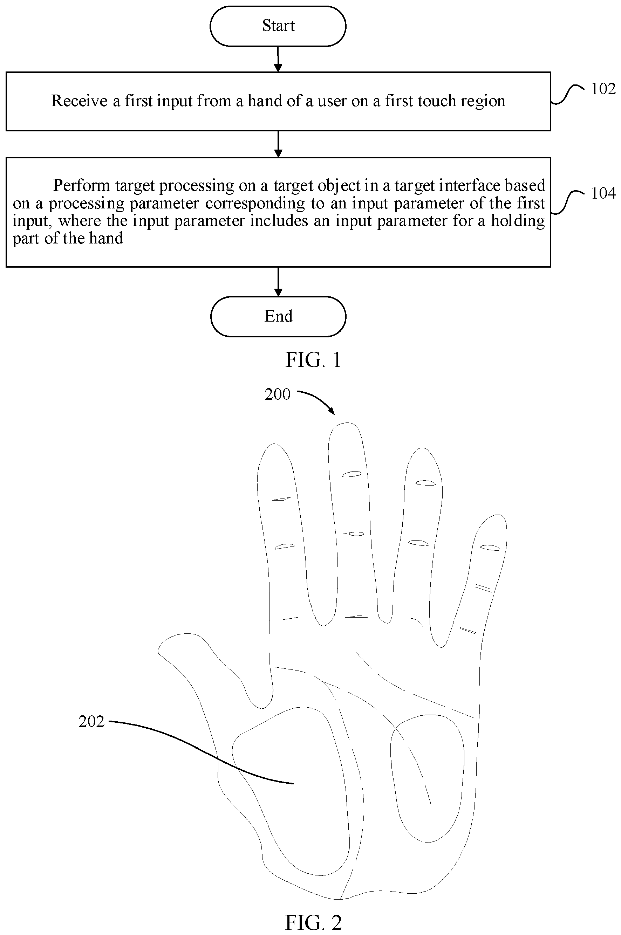

The following specifically describes a one-hand control method and apparatus for a touchscreen, an electronic device, and a storage medium provided in the embodiments of this application through specific embodiments and application scenarios thereof with reference to FIG. 1 to FIG. 10.

An embodiment of this application provides a one-hand control method for a touchscreen, and FIG. 1 is a schematic flowchart of the one-hand control method for a touchscreen according to an embodiment of this application. As shown in FIG. 1, the one-hand control method for a touchscreen includes the following steps.

Step 102. Receive a first input from a hand of a user on a first touch region.

The first touch region includes a touch region set on the touchscreen of the electronic device, and the first input includes a touch input of a holding part of the hand on the first touch region. When the first input is received on the first touch region of the electronic device, it is determined that a display interface needs to be processed in this case.

For example, the first touch region may be a region in which the user operates by one hand, and the holding part of a palm touches the touchscreen of the electronic device in a case that a finger operates in a region far away from the finger.

For example, a touch region that palm muscles (such as thenar eminence) may touch in a case that the user needs to touch the top of the touchscreen near the edge with one hand; a touch region that palm muscles (such as thenar eminence) may touch in a case that the user needs to touch a position in a diagonal direction of the touchscreen near the edge with one hand; and a touch region that palm muscles (such as thenar eminence) may touch in a case that the user needs to touch a position in another side of the touchscreen near the edge with one hand.

FIG. 2 is a schematic diagram of a specific part of a palm of a user according to an embodiment of this application. As shown in FIG. 2, muscles (thenar eminence) of a palm 200 close to a thumb is used as a specific part 202 in a case that a user holds an electronic device with one hand.

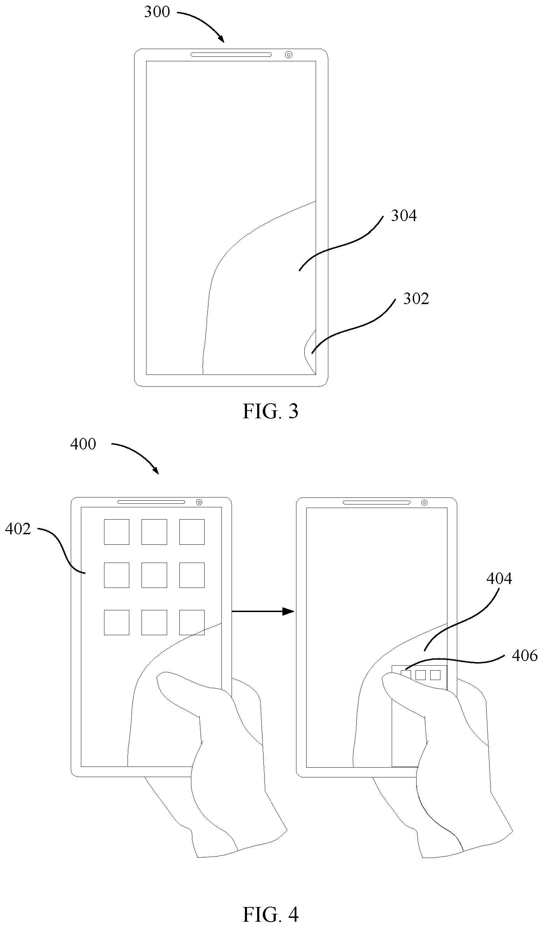

FIG. 3 is a first schematic diagram of a display interface of an electronic device according to an embodiment of this application. As shown in FIG. 3, when a user holds the electronic device with one hand, a region touched by palm muscles (thenar eminence) of the user in a display interface 300 is set as a first touch region 302.

Step 104. Perform target processing on a target object in a target interface based on a processing parameter corresponding to an input parameter of the first input. The input parameter includes an input parameter for a holding part of the hand.

The input parameter of the first input includes a moving direction of the holding part of the hand on the first touch region, the target object includes the display interface on the touchscreen, and the target processing includes display adjustment on the target interface. Specifically, the target processing includes scaling down the interface or moving the interface. Corresponding target processing is performed on the display interface based on a processing parameter corresponding to the input parameter for the holding part of the hand on the touchscreen in the first input.

In this embodiment of this application, when the user operates the electronic device with one hand, it is determined that the user needs to touch display content far away from the finger in a case that the first input from the holding part of the hand of the user on the first touch region, and target processing is performed on the display interface based on the processing parameter corresponding to the input parameter for the holding part of the hand on the touchscreen in the first input, where the target processing includes display adjustment on the target interface.

Specifically, in a case that a user needs to tap content far away from the finger when operating the electronic device with one hand, but the holding part of the hand of the user may move with the movement of the finger, resulting in the holding part of the hand touching the first touch region, the electronic device may receive the first input from the holding part of the hand of the user on the first touch region, and correspondingly scale down or move the display interface of the touchscreen based on a processing parameter corresponding to a moving direction of the holding part of the hand on the first touch region in the first input, so that the user can touch the target content in the display interface.

For example, in a case that a user needs to tap content near a border on another side of the touchscreen when operating the electronic device with one hand, resulting in the holding part of the hand touching the first touch region, the electronic device may receive the first input from the holding part of the hand of the user on the first touch region, and move the display interface of the touchscreen to a palm direction based on the processing parameter corresponding to the moving direction of the holding part of the hand on the first touch region in the first input; and in a case that the user needs to tap content near a border in the diagonal direction of the touchscreen when operating the electronic device with one hand, resulting in the holding part of the hand touching the first touch region, the electronic device may receive the first input from the holding part of the hand of the user on the first touch region, and scale down the display interface of the touchscreen to the palm direction based on the processing parameter corresponding to the moving direction of the holding part of the hand on the first touch region in the first input.

In this embodiment of this application, the first touch region is set on the touchscreen of the electronic device, and a touch intention of the user is determined by receiving the first input from the holding part of the hand of the user on the first touch region. When it is determined that the user is about to touch a region that cannot be normally touched by one hand, the display interface is correspondingly scaled down or moved based on the processing parameter corresponding to the moving direction of the holding part of the hand in the first input, so that the user can touch the target content with one hand. In this way, the electronic device can automatically process the display interface correspondingly based on an operation requirement of the user without a special operation from the user, so that the user can easily touch a position that needs to be touched.

In some embodiments of this application, the input parameter of the first input includes a moving track of the holding part of the hand in the first touch region.

In this embodiment of this application, in a case that the input parameter includes the moving track, the electronic device can determine the processing parameter of target processing based on the moving track of the holding part of the hand of the user in the first touch region.

In a case that a finger of a user taps content far away, the touchscreen cannot directly collect a moving direction of the finger, but the holding part of the hand may move with the movement of the finger of the user, and a moving track of the finger can be determined based on the moving track of the holding part of the hand in the first touch region. Therefore, target processing is performed on the target object by using the processing parameter determined based on the moving track, so that a processing result can meet use requirements of the user. The moving track is obtained based on a touch track of the holding part of the hand in the first touch region.

In this embodiment of this application, the moving direction of the holding part of the hand can be determined based on the touch track of the holding part of the hand in the first touch region, to provide data basis for the electronic device to process the display interface and facilitate the electronic device to correspondingly process the display interface.

In some embodiments, the processing parameter includes a downscaling direction of the target interface or a moving direction of the target interface; the performing target processing on a target object in a target interface based on a processing parameter corresponding to an input parameter of the first input includes: scaling down the target interface along the downscaling direction or moving the target interface along the moving direction, so that at least part of the target interface is located in a second touch region; and an area of the first touch region is smaller than an area of the second touch region.

The second touch region is a touch region that the finger can touch when the user holds the electronic device with one hand.

FIG. 3 is a first schematic diagram of a display interface of an electronic device according to an embodiment of this application. As shown in FIG. 3, a region that the thumb of a user can normally touch is set as a second touch region 304.

In this embodiment of this application, a processing parameter of the first input includes a parameter for the downscaling direction or the moving direction of the display interface, and the display interface is correspondingly scaled down or moved based on the parameter for the downscaling direction or the moving direction, so that at least part of the display interface is located in the second touch region.

Specifically, when the holding part of the hand touches the first touch region, the first input may be received by the electronic device, and the processing parameter of the first input includes the downscaling direction or the moving direction of the target interface in the display interface. Therefore, the display interface is correspondingly scaled down or moved based on the downscaling direction or the moving direction, so that part of the display interface is located in a touch region that the finger can normally touch.

In a case that the processing parameter includes the downscaling direction, the display interface is scaled down along the downscaling direction based on the parameter for the downscaling direction, so that part of the target interface is located in a touch region that the finger of the user can touch.

FIG. 4 is a second schematic diagram of a display interface of an electronic device according to an embodiment of this application. As shown in FIG. 4, an electronic device 400 is a mobile phone. When a display interface 402 is entirely displayed on a display screen of the electronic device 400, in a case that a user holds the electronic device 400 with one hand, palm muscles (thenar eminence) of the user touch a first touch region, and the user continuously extends a finger to target content 406 displayed outside a second touch region 404, the electronic device 400 displays the entire display interface 402 in the second touch region 404 in a downscaling size, so that the user can easily tap the target content 406 located in the second touch region 404 with the finger.

In a case that the processing parameter includes a translation direction, the display interface is moved along a moving direction based on a parameter for the moving direction, so that part of the target interface is located in a touch region that the finger of the user can touch.

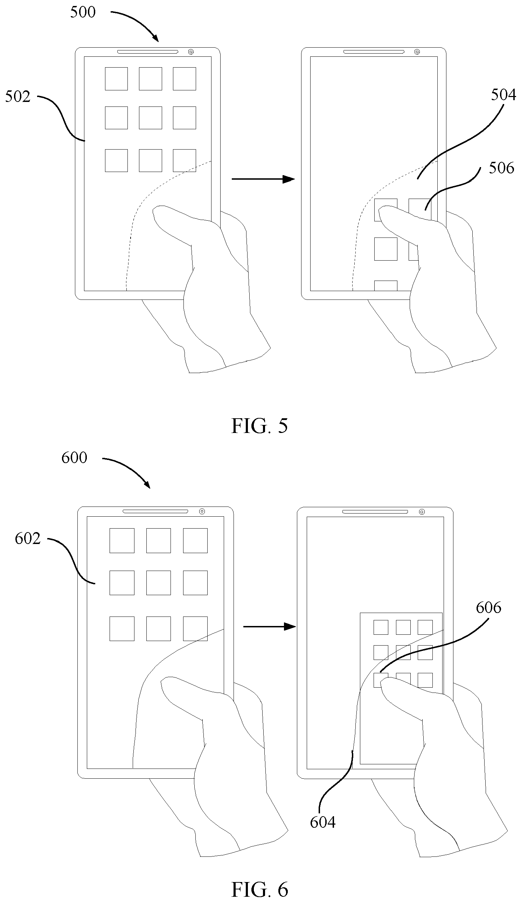

FIG. 5 is a third schematic diagram of a display interface of an electronic device according to an embodiment of this application. As shown in FIG. 5, an electronic device 500 is a mobile phone. When a display interface 502 is entirely displayed on a display screen of the electronic device 500, in a case that a user holds the electronic device 500 with one hand, palm muscles (thenar eminence) of the user touch a first touch region, and the user continuously extends a finger to target content 506 displayed outside a second touch region 504, the electronic device 500 translates the entire display interface 502 into the second touch region 504, so that the user can easily tap the target content 506 located in the second touch region 504 with the finger.

In this embodiment of this application, an area of the first touch region is smaller than an area of the second touch region. The first touch region is within the second touch region, and the first touch region and the second touch region are set to limit a touch region in which the user operates with one hand. Specifically, when the user operates normally with one hand, the finger can tap content in the second touch region, and a holding part of the hand may not touch the second touch region.

In this embodiment of this application, based on the processing parameter of the first input, the display interface is correspondingly scaled down or moved based on the downscaling direction or the moving direction in the processing parameter, and the second touch region is set, so that part of the display interface is located in the touch region that the finger of the user can touch. This facilitates the electronic device to scale down or move the display interface according to different operation requirements of the user, to ensure that the user can easily perform an operation on interface content with one hand in different operation cases.

In some embodiments of this application, the processing parameter further includes target content in the target interface and a target position corresponding to the target content; and the scaling down the target interface along the downscaling direction or moving the target interface along the moving direction, so that at least part of the target interface is located in a second touch region includes: scaling down the target interface along the downscaling direction or moving the target interface along the moving direction, and displaying the target content in the target interface at a target position of the second touch region.

In this embodiment of this application, the processing parameter of the first input further includes target content in the target interface and a target position corresponding to the target content. The target content is content on which the user needs to operate, and the target position is a position in which the target content needs to be moved. In the process of scaling down or moving the display interface of the touchscreen, the target content is moved to the target position in the second region.

Specifically, when the holding part of the hand touches the first touch region, the first input may be received by the electronic device, and the processing parameter of the first input includes the target content in the target interface and a target position corresponding to the target content. In a case that the target content and the target position are determined, the display interface is correspondingly scaled down or moved, and content on which the user needs to operate is moved to the target position in the touch region that the finger can normally touch.

For example, based on the target content in the target interface and a target position corresponding to the target content that are included in the processing parameter of the first input, in a case that the display interface is scaled down, the content on which the user needs to operate is moved to the target position in the touch region that the finger of the user can touch.

FIG. 6 is a fourth schematic diagram of a display interface of an electronic device according to an embodiment of this application. As shown in FIG. 6, an electronic device 600 is a mobile phone. When a display interface 602 is entirely displayed on a display screen of the electronic device 600, in a case that a user holds the electronic device 600 with one hand, palm muscles (thenar eminence) of the user touch a first touch region, and the user continuously extends a finger outside a second touch region 604, based on a moving track of the thenar eminence in the first touch region, the electronic device determines target content 606 outside the second touch region 604, determines a target position of the target content 606 in the second touch region 604, and displays the target content 606 at the target position in the second touch region 604, so that the user can touch the target content 606 at the target position without moving the finger in a large range.

It is worth noting that in the process of displaying the target content at the target position, the electronic device controls the entire display interface for scaling up/down, so when different pieces of target content in the display interface are displayed at the target position, ratios for scaling up/down the display interface are different.

For example, based on the target content in the target interface and a target position corresponding to the target content that are included in the processing parameter of the first input, in a case that the display interface is moved, the content on which the user needs to operate is moved to the target position in the touch region that the finger of the user can touch.

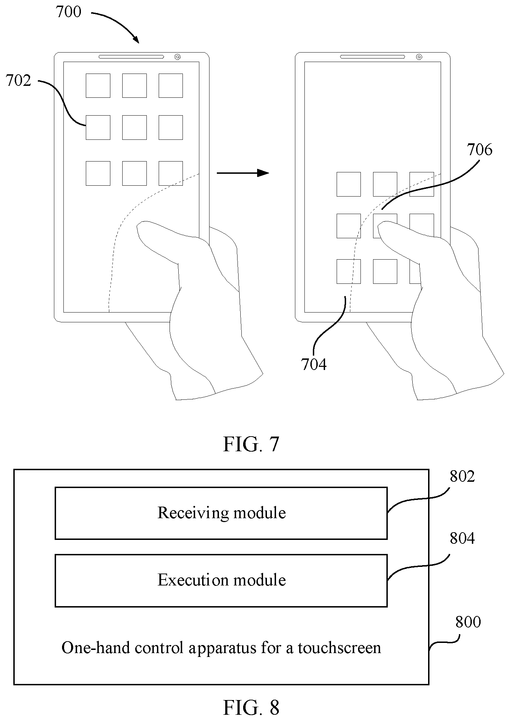

FIG. 7 is a fifth schematic diagram of a display interface of an electronic device according to an embodiment of this application. As shown in FIG. 7, an electronic device 700 is a mobile phone. When a display interface 702 is entirely displayed on a display screen of the electronic device 700, in a case that a user holds the electronic device 700 with one hand, palm muscles (thenar eminence) of the user touch a first touch region, and the user continuously extends a finger outside a second touch region 704, based on a moving track of the thenar eminence in the first touch region, the electronic device determines target content 706 outside the second touch region 704, determines a target position of the target content 706 in the second touch region 704, and displays the target content 706 at the target position in the second touch region 704, so that the user can touch the target content 706 at the target position without moving the finger in a large range.

It is worth noting that in the process of displaying the target content at the target position, the electronic device controls the entire display interface for movement, so when different pieces of target content in the display interface are displayed at the target position, a moving direction and displacement of the display interface are not the same.

In this embodiment of this application, based on the target content and the corresponding target position in the processing parameter of the first input, in the process of scaling down or moving the display interface, the content on which the user needs to operate is moved to the target position in the touch region that the finger of the user can touch. This ensures that the content on which the user needs to operate is moved to the target position that the finger of the user can touch, and improves accuracy of user operation.

In some embodiments of this application, before the displaying the target content in the target interface at a target position of the second touch region, the method further includes: filtering the target content out from a plurality of pieces of first content in the target interface based on the moving track, where the plurality of pieces of first content are displayed outside the second touch region.

In this embodiment of this application, there are a plurality of pieces of first content outside the second touch region, and the plurality of pieces of first content outside the second touch region are filtered based on the moving track of the holding part of the hand, to determine the target content among the plurality of pieces of first content.

For example, outside the second touch region, there is operable content both on the top or in the diagonal direction of the touchscreen. In a case that a user needs to perform an operation on the content on the top of the touchscreen, the electronic device may determine, based on the moving track of the holding part of the hand, that the content on the top of the touchscreen is the target content on which the user needs to operate in two pieces of content respectively on the top and in the diagonal direction of the touchscreen.

In this embodiment of this application, the plurality of pieces of content outside the second touch region are filtered based on the moving track of the holding part of the hand, to determine the target content, thereby improving accuracy of the electronic device in identifying the content on which the user needs to operate.

In some embodiments of this application, there are a plurality of pieces of target content, and the displaying the target content in the target interface at a target position of the second touch region includes: determining a display order of the pieces of target content based on the input parameter of the first input; and displaying the pieces of target content at the target position of the second touch region in sequence based on the display order.

In this embodiment of this application, when there are a plurality of pieces of target content, the plurality of pieces of target content are displayed in order based on the input parameter of the first input, and the plurality of pieces of target content are sequentially moved to the target position in the second touch region based on a display order.

Specifically, in a case that a user needs to perform an operation on a plurality of pieces of content, the plurality of pieces of target content are displayed in order based on the input parameter of the first input, and the plurality of pieces of target content are sequentially moved, based on a display order, to the target position in the touch region that the finger can normally touch.

For example, when a user needs to continuously perform an operation on a plurality of pieces of content on the top of the touchscreen, such as a confirm key, an input box, and a return key, these pieces of content are sorted according to the order of the input box, the confirm key, and the return key based on the input parameter of the first input, and these pieces of target content are sequentially moved, based on the order, to the target position in the touch region that the finger can normally touch.

In this embodiment of this application, in a case of a plurality of pieces of target content, the plurality of pieces of target content are displayed in order based on the input parameter of the first input, and the plurality of pieces of target content are sequentially moved, based on a display order, to the target position in the touch region that the finger can normally touch. In this way, the user can perform an operation on these pieces of target content in a correct order, thereby ensuring fluency of user operation.

In some embodiments of this application, the display order is associated with historical big data of the pieces of target content.

In this embodiment of this application, in a case of a plurality of pieces of target content, the plurality of pieces of target content are displayed in order, where the display order is associated with historical big data of the pieces of target content.

Specifically, the electronic device reads historical trigger records of the plurality of pieces of target content, and the electronic device can determine, based on the historical trigger records, a probability that an input operation is performed on the plurality of pieces of target content, so the electronic device can sort the plurality of pieces of target content in a display order based on the historical trigger records.

In this embodiment of this application, after performing target processing based on the first input from the hand of the user on the first touch region, the electronic device records the performed target processing. In a case of performing the same first input, the electronic device can directly perform the corresponding target processing based on recorded historical big data. The target processing includes but is not limited to displaying the plurality of pieces of target content in the display order.

Specifically, the electronic device may record various pieces of display content in an interface of an application, and the pieces of display content include various components in the interface, including: a key component, a picture display component, a text input component, and the like. Specifically, the electronic device may record various parameters of the display content, where the parameters of the display content include a name, position coordinates, a default type for scaling up/down, the number of times of continuous operation, and a probability of operation. The name is a type of the component, the position coordinates are relative position coordinates of the component, the default type for scaling up/down includes "maintain downscaling" and "automatic recovery", the number of times of continuous operation is the number of times of continuously tapping the same display content, and the probability of operation is a probability of performing an operation on one piece of display content.

For example, when a user needs to tap a plurality of components far away from the finger in a case of operating a specific application, target components that the user needs to operate are determined based on the moving direction of the holding part of the hand. The electronic device may query operation records of the user in a current program interface and sort the target components based on the "probability of operation" for the components. First, the first component in the sequence is moved to the position at which the user can operate. After the user finishes operation on the first component in the sequence, the electronic device may move the second component, and the other components are moved in turn. It should be noted that, after the first component in the sequence is moved to the position at which the user can operate, if the user does not operate for more than 0.3 seconds, the electronic device may directly move the second component, and after more than 0.3 seconds, if the user still does not operate the second component, the entire interface of the program will be scaled down to the position at which the user can operate with one hand, to ensure that the user can finish the operation.

In this embodiment of this application, the plurality of pieces of target content are sorted for display based on historical trigger records about the plurality of pieces of target content in the electronic device. This improves accuracy of the electronic device in sorting the plurality of pieces of operation content for display.

In some embodiments of this application, after the displaying the target content in the target interface at a target position of the second touch region, the method further includes: in a case that a second input for the target content is received, based on a content type of the target content, controlling the target interface to restore display in an initial display region or controlling the target interface to remain in a current display region.

In this embodiment of this application, in a case that the target content in the target interface is moved to the target position in the second touch region, a user needs to perform a second input on the target content. For the second input of the user, based on a content type of the target content, the target interface is controlled to restore display in the initial display region, or the target interface is controlled to remain in a current display region.

Specifically, in a case that the electronic device processes the target interface and moves the target content in the target interface to the target position in the second touch region, a user needs to perform the second input on the target content, and the electronic device may process the display interface differently based on different types of the operation content, and can control the target interface to restore display in the initial display region or control the target interface to remain in the current display region.

In this embodiment of this application, based on a type of the operation content, the target interface can be controlled to restore display in an initial display region, or the target interface can be controlled to remain in a current display region. This ensures operation fluency and convenience for a user when facing different types of content.

In some embodiments of this application, based on a content type of the target content, the controlling the target interface to restore display in an initial display region or controlling the target interface to remain in a current display region includes: controlling the target interface to restore display in the initial display region in a case that the target content is a first type of content, where the first type of content is able to respond to a single operation input; and controlling the target interface to remain in the current display region in a case that the target content is a second type of content, where the second type of content is able to respond to a plurality of times of operation input.

In this embodiment of this application, the target content includes a first type of content and a second type of content. Specifically, the first type of content is able to respond to a single operation input, and the second type of content is able to respond to a plurality of times of operation input. In a case of performing the second input on the target content, the user performs different operations on the target interface based on the content type of the target content. When the target content is the first type of content, the target interface is controlled to restore display in the initial display region; and when the target content is the second type of content, the target interface is controlled to remain in the current display region.

Specifically, when the user needs to tap a return key which is far away from the finger, the display interface restores display in the initial display region after the return key is tapped; and when the user needs to perform input in a text input box far away from the finger, the display interface remains in the current display region during the input process.

For example, the first type of content is a control in response to an execution action of a single tap input of the user, such as an "undo" control. In a case that the "undo" control is displayed in the second touch region, the user enables the electronic device to perform a corresponding undo operation by tapping the "undo" control once. After the user finishes the single tap input, it can be determined that the user has finished all operations for the "undo" control, and the target interface restores for display.

For example, the second type of content is a control in response to an execution action of a plurality of times of tap input or dragging input of the user, such as a movable target control. In a case that the target control is displayed in the second touch region, the user drags the target control for a plurality of times to adjust a position of a profile picture. The display interface remains in the current display region until the user finishes the plurality of times dragging and confirms finishing.

For example, the second type of content is a control in response to an execution action of a plurality of times of tap input or dragging input of the user, such as a "text input" control. In a case that the "text input" control is displayed in the second touch region, the user needs to operate the "text input" control for a plurality of times, input a text in the "text input" control, and display content of the text that is input. The display interface remains in the current display region until the user finishes the text input and confirms finishing of the input.

In this embodiment of this application, for content that is able to respond to a single operation input, the target interface is controlled to restore display in an initial display region; and for content that is able to respond to a plurality of times of operation input, the target interface is controlled to remain in a current display region. This ensures operation fluency and convenience for the user when facing different types of content.

The one-hand control method for a touchscreen provided in this embodiment of this application may be executed by a one-hand control apparatus for a touchscreen. In this embodiment of this application, that the one-hand control apparatus for a touchscreen performs the one-hand control method for a touchscreen is used as an example to describe the one-hand control apparatus for a touchscreen provided in the embodiments of this application.

Some embodiments of this application provide a one-hand control apparatus for a touchscreen, and FIG. 8 is a block diagram of a structure of a one-hand control apparatus for a touchscreen according to an embodiment of this application. As shown in FIG. 8, a one-hand control apparatus 800 for a touchscreen includes:
a receiving module 802, configured to receive a first input from a hand of a user on a first touch region; and
an execution module 804, configured to perform target processing on a target object in a target interface based on a processing parameter corresponding to an input parameter of the first input, where
the input parameter includes an input parameter for a holding part of the hand.

In this embodiment of this application, the first touch region is set on the touchscreen of the electronic device, and a touch intention of the user is determined by receiving the first input from the holding part of the hand of the user on the first touch region. When it is determined that the user is about to touch a region that cannot be normally touched by one hand, the display interface is correspondingly scaled down or moved based on the processing parameter corresponding to the moving direction of the holding part of the hand in the first input, so that the user can touch the target content with one hand. In this way, the electronic device can automatically process the display interface correspondingly based on an operation requirement of the user without a special operation from the user, so that the user can easily touch a position that needs to be touched.

In some embodiments of this application, the input parameter of the first input includes a moving track of the holding part of the hand in the first touch region.

In this embodiment of this application, the moving direction of the holding part of the hand can be determined based on the touch track of the holding part of the hand in the first touch region, to provide data basis for the electronic device to process the display interface and facilitate the electronic device to correspondingly process the display interface.

In some embodiments of this application, the processing parameter includes a downscaling direction of the target interface or a moving direction of the target interface; and
the execution module 804 is further configured to: scale down the target interface along the downscaling direction or move the target interface along the moving direction, so that at least part of the target interface is located in a second touch region.

In this embodiment of this application, based on the processing parameter of the first input, the display interface is correspondingly scaled down or moved based on the downscaling direction or the moving direction in the processing parameter, and the second touch region is set, so that part of the display interface is located in the touch region that the finger of the user can touch. This facilitates the electronic device to scale down or move the display interface according to different operation requirements of the user, to ensure that the user can easily perform an operation on interface content with one hand in different operation cases.

In some embodiments of this application, the processing parameter further includes target content in the target interface and a target position corresponding to the target content, and the control apparatus further includes:
a display module, configured to: scale down the target interface along the downscaling direction or move the target interface along the moving direction, and display the target content in the target interface at a target position of the second touch region, where
an area of the first touch region is smaller than an area of the second touch region.

In this embodiment of this application, based on the processing parameter of the first input, the display interface is correspondingly scaled down or moved based on the downscaling direction or the moving direction in the processing parameter, and the second touch region is set, so that part of the display interface is located in the touch region that the finger of the user can touch. This facilitates the electronic device to scale down or move the display interface according to different operation requirements of the user, to ensure that the user can easily perform an operation on interface content with one hand in different operation cases.

In some embodiments of this application, the one-hand control apparatus for a touchscreen further includes:
a filtering module, configured to filter the target content out from a plurality of pieces of first content in the target interface based on the moving track, where
the plurality of pieces of first content are displayed outside the second touch region.

In this embodiment of this application, the plurality of pieces of content outside the second touch region are filtered based on the moving track of the holding part of the hand, to determine the target content, thereby improving accuracy of the electronic device in identifying the content on which the user needs to operate.

In some embodiments of this application, the one-hand control apparatus for a touchscreen further includes: a determining module, configured to determine a display order of the pieces of target content based on the input parameter of the first input, where
the display module is further configured to display the pieces of target content at the target position of the second touch region in sequence based on the display order.

In this embodiment of this application, in a case of a plurality of pieces of target content, the plurality of pieces of target content are displayed in order based on the input parameter of the first input, and the plurality of pieces of target content are sequentially moved, based on a display order, to the target position in the touch region that the finger can normally touch. In this way, the user can perform an operation on these pieces of target content in a correct order, thereby ensuring fluency of user operation.

In some embodiments of this application, the display order is associated with historical big data of the pieces of target content.

In this embodiment of this application, the plurality of pieces of target content are sorted for display based on historical trigger records about the plurality of pieces of target content in the electronic device. This improves accuracy of the electronic device in sorting the plurality of pieces of operation content for display.

In some embodiments of this application, the one-hand control apparatus for a touchscreen further includes: a control module, configured to: in a case that a second input for the target content is received, based on a content type of the target content, control the target interface to restore display in an initial display region or control the target interface to remain in a current display region.

In this embodiment of this application, based on a type of the operation content, the target interface can be controlled to restore display in an initial display region, or the target interface can be controlled to remain in a current display region. This ensures operation fluency and convenience for the user when facing different types of content.

In some embodiments of this application, the control module is further configured to control the target interface to restore display in the initial display region in a case that the target content is a first type of content, where the first type of content is able to respond to a single operation input; and
the control module is further configured to control the target interface to remain in the current display region in a case that the target content is a second type of content, where the second type of content is able to respond to a plurality of times of operation input.

In this embodiment of this application, for content that is able to respond to a single operation input, the target interface is controlled to restore display in an initial display region; and for content that is able to respond to a plurality of times of operation input, the target interface is controlled to remain in a current display region. This ensures operation fluency and convenience for the user when facing different types of content.

It should be noted that the third input may be: a tap input from the user, a voice command entered by the user, or a specific gesture entered by the user, which can be specifically determined according to actual use requirements and is not limited in this embodiment of this application.

The one-hand control apparatus for a touchscreen in this embodiment of this application may be an electronic device, or may be a component such as an integrated circuit or a chip in the electronic device. The electronic device may be a terminal, or another device other than the terminal. For example, the electronic device may be a mobile phone, a tablet computer, a notebook computer, a palmtop computer, an in-vehicle electronic device, a mobile Internet device (Mobile Internet Device, MID), an augmented reality (augmented reality, AR)/virtual reality (virtual reality, VR) device, a robot, a wearable device, an ultra-mobile personal computer (ultra-mobile personal computer, UMPC), a netbook, a personal digital assistant (personal digital assistant, PDA), or the like. The electronic device may be alternatively a server, a network attached storage (Network Attached Storage, NAS), a personal computer (personal computer, PC), a television (television, TV), a teller machine, a self-service machine, or the like. This is not specifically limited in this embodiment of this application.

The one-hand control apparatus for a touchscreen in this embodiment of this application may be an apparatus with an operating system. The operating system may be an Android (Android) operating system, an iOS operating system, or other possible operating systems. This is not specifically limited in this embodiment of this application.

The one-hand control apparatus for a touchscreen provided in this embodiment of this application can implement the processes that are implemented in the foregoing method embodiments. To avoid repetition, details are not described herein again.

Optionally, an embodiment of this application further provides an electronic device, including a one-hand control apparatus for a touchscreen according to any one of the above embodiments, and having all the beneficial effects of the one-hand control apparatus for a touchscreen according to any one of the above embodiments. Details are not described herein again.

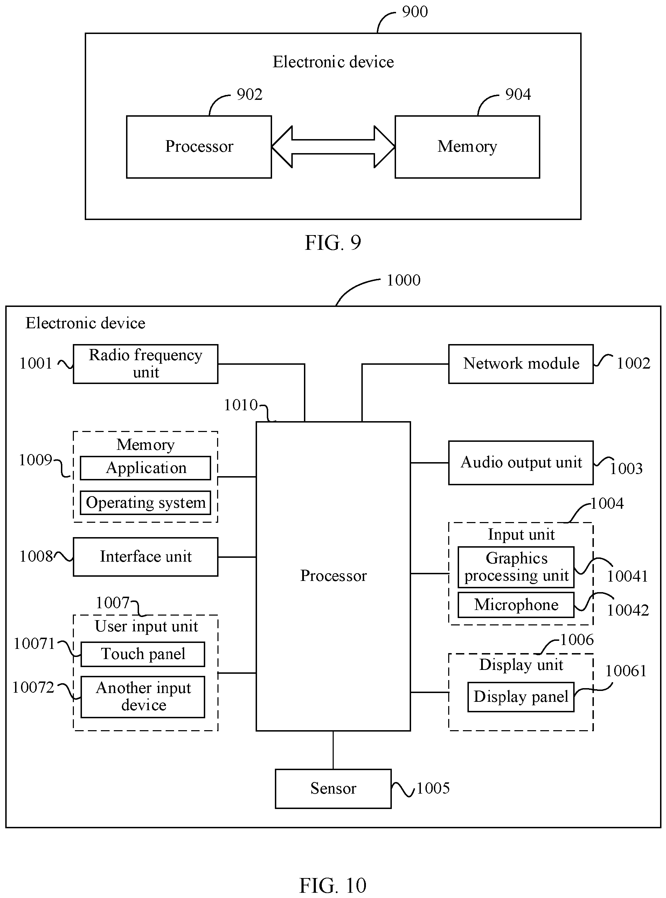

Optionally, an embodiment of this application further provides an electronic device. FIG. 9 is a block diagram of a structure of an electronic device according to an embodiment of this application. As shown in FIG. 9, an electronic device 900 includes a processor 902, a memory 904, and a program or an instruction stored in the memory 904 and executable on the processor 902. When the program or the instruction is executed by the processor 902, the processes of the foregoing one-hand control method embodiment for a touchscreen are implemented, and a same technical effect can be achieved. To avoid repetition, details are not described herein again.

It should be noted that, the electronic device in this embodiment of this application includes the foregoing mobile electronic device and the foregoing non-mobile electronic device.

FIG. 10 is a schematic diagram of a hardware structure of an electronic device according to an embodiment of this application.

The electronic device 1000 includes but is not limited to components such as a radio frequency unit 1001, a network module 1002, an audio output unit 1003, an input unit 1004, a sensor 1005, a display unit 1006, a user input unit 1007, an interface unit 1008, a memory 1009, and a processor 1010.

A person skilled in the art can understand that the electronic device 1000 may further include a power supply (such as a battery) that supplies power to each component. The power supply may be logically connected to the processor 1010 by using a power supply management system, to implement functions such as charging and discharging management, and power consumption management by using the power supply management system. The electronic device is not limited to the electronic device structure shown in FIG. 10. The electronic device may include more or fewer components than those shown in the figure, or combine some components, or have a different component arrangement. Details are not described herein again.

The user input unit 1007 is configured to receive a first input from a hand of a user on a first touch region; and
the processor 1010 is configured to perform target processing on a target object in a target interface based on a processing parameter corresponding to an input parameter of the first input, where
the input parameter includes an input parameter for a holding part of the hand.

In this embodiment of this application, a corresponding first touch region and a corresponding second touch region are designed in the display interface of the electronic device, and the first input executed by a specific part of one hand of the user is detected through the first touch region, so that a touch intention of the user is detected. When it is detected that the user is touching a region that cannot be normally touched with one hand, the display interface is scaled down to the second touch region as a whole, so that the user can touch the target content in the second touch region with one hand. In this way, the electronic device can automatically scale down the display interface for display based on an operation of the user without a special operation from the user, so that the user can easily touch a position that needs to be touched.

Further, the input parameter of the first input includes a moving track of the holding part of the hand in the first touch region.

In this embodiment of this application, the moving direction of the holding part of the hand can be determined based on the touch track of the holding part of the hand in the first touch region, to provide data basis for the electronic device to process the display interface and facilitate the electronic device to correspondingly process the display interface.

Further, the processing parameter includes a downscaling direction of the target interface or a moving direction of the target interface; and
the processor 1010 is further configured to: scale down the target interface along the downscaling direction or move the target interface along the moving direction, so that at least part of the target interface is located in a second touch region.

In this embodiment of this application, based on the processing parameter of the first input, the display interface is correspondingly scaled down or moved based on the downscaling direction or the moving direction in the processing parameter, and the second touch region is set, so that part of the display interface is located in the touch region that the finger of the user can touch. This facilitates the electronic device to scale down or move the display interface according to different operation requirements of the user, to ensure that the user can easily perform an operation on interface content with one hand in different operation cases.

Further, the processing parameter further includes target content in the target interface and a target position corresponding to the target content, and the control apparatus further includes:
a display unit 1006, configured to: scale down the target interface along the downscaling direction or move the target interface along the moving direction, and display the target content in the target interface at a target position of the second touch region.

In this embodiment of this application, based on the processing parameter of the first input, the display interface is correspondingly scaled down or moved based on the downscaling direction or the moving direction in the processing parameter, and the second touch region is set, so that part of the display interface is located in the touch region that the finger of the user can touch. This facilitates the electronic device to scale down or move the display interface according to different operation requirements of the user, to ensure that the user can easily perform an operation on interface content with one hand in different operation cases.

Further, the processor 1010 is configured to filter the target content out from a plurality of pieces of first content in the target interface based on the moving track, where the plurality of pieces of first content are displayed outside the second touch region.

In this embodiment of this application, the plurality of pieces of content outside the second touch region are filtered based on the moving track of the holding part of the hand, to determine the target content, thereby improving accuracy of the electronic device in identifying the content on which the user needs to operate.

Further, the processor 1010 is configured to determine a display order of the pieces of target content based on the input parameter of the first input; and
the display unit 1006 is further configured to display the pieces of target content at the target position of the second touch region in sequence based on the display order.

In this embodiment of this application, in a case of a plurality of pieces of target content, the plurality of pieces of target content are displayed in order based on the input parameter of the first input, and the plurality of pieces of target content are sequentially moved, based on a display order, to the target position in the touch region that the finger can normally touch. In this way, the user can perform an operation on these pieces of target content in a correct order, thereby ensuring fluency of user operation.

Further, the display order is associated with historical big data of the pieces of target content.

In this embodiment of this application, the plurality of pieces of target content are sorted for display based on historical trigger records about the plurality of pieces of target content in the electronic device. This improves accuracy of the electronic device in sorting the plurality of pieces of operation content for display.

Further, the processor 1010 is configured to: in a case that a second input for the target content is received, based on a content type of the target content, control the target interface to restore display in an initial display region or control the target interface to remain in a current display region.

In this embodiment of this application, based on a type of the operation content, the target interface can be controlled to restore display in an initial display region, or the target interface can be controlled to remain in a current display region. This ensures operation fluency and convenience for the user when facing different types of content.

Further, the processor 1010 is further configured to control the target interface to restore display in the initial display region in a case that the target content is a first type of content, where the first type of content is able to respond to a single operation input; and
the processor 1010 is further configured to control the target interface to remain in the current display region in a case that the target content is a second type of content, where the second type of content is able to respond to a plurality of times of operation input.

In this embodiment of this application, for content that is able to respond to a single operation input, the target interface is controlled to restore display in an initial display region; and for content that is able to respond to a plurality of times of operation input, the target interface is controlled to remain in a current display region. This ensures operation fluency and convenience for the user when facing different types of content.

It should be understood that, in this embodiment of this application, the input unit 1004 may include a graphics processing unit (Graphics Processing Unit, GPU) 10041 and a microphone 10042, and the graphics processing unit 10041 processes image data of a still picture or a video obtained by an image capture apparatus (such as a camera) in a video capture mode or an image capture mode. The display unit 1006 may include a display panel 10061, and the display panel 10061 may be configured in a form of a liquid crystal display, an organic light-emitting diode, or the like. The user input unit 1007 includes at least one of a touch panel 10071 and another input device 10072. The touch panel 10071 is also referred to as a touchscreen. The touch panel 10071 may include two parts: a touch detection apparatus and a touch controller. The another input device 10072 may include but is not limited to a physical keyboard, a functional button (such as a volume control button or a power on/off button), a trackball, a mouse, and a joystick. Details are not described herein again.

The memory 1009 may be configured to store software programs and various data. The memory 1009 may mainly include a first storage area for storing a program or an instruction and a second storage area for storing data. The first storage area may store an operating system, and an application or an instruction required by at least one function (for example, a sound playing function or an image playing function). In addition, the memory 1009 may be a volatile memory or a non-volatile memory, or the memory 1009 may include a volatile memory and a non-volatile memory. The non-volatile memory may be a read-only memory (Read-Only Memory, ROM), a programmable read-only memory (Programmable ROM, PROM), an erasable programmable read-only memory (Erasable PROM, EPROM), an electrically erasable programmable read-only memory (Electrically EPROM, EEPROM), or a flash memory. The volatile memory may be a random access memory (Random Access Memory, RAM), a static random access memory (Static RAM, SRAM), a dynamic random access memory (Dynamic RAM, DRAM), a synchronous dynamic random access memory (Synchronous DRAM, SDRAM), a double data rate synchronous dynamic random access memory (Double Data Rate SDRAM, DDRSDRAM), an enhanced synchronous dynamic random access memory (Enhanced SDRAM, ESDRAM), a synch link dynamic random access memory (Synch link DRAM, SLDRAM), and a direct rambus random access memory (Direct Rambus RAM, DRRAM). The memory 1009 in this embodiment of this application includes but is not limited to these memories and any memory of another proper type.

The processor 1010 may include one or more processing units. Optionally, an application processor and a modem processor are integrated into the processor 1010. The application processor mainly processes an operating system, a user interface, an application, or the like. The modem processor mainly processes a wireless communication signal, for example, a baseband processor. It can be understood that the foregoing modem processor may not be integrated into the processor 1010.

An embodiment of this application further provides a readable storage medium. The readable storage medium stores a program or an instruction, and when the program or the instruction is executed by a processor, the processes of the foregoing method embodiment are implemented, and a same technical effect can be achieved. To avoid repetition, details are not described herein again.

The processor is the processor in the electronic device in the foregoing embodiment. The readable storage medium includes a computer-readable storage medium, such as a computer read-only memory (ROM), a random access memory (RAM), a magnetic disk, or an optical disc.

An embodiment of this application further provides a chip. The chip includes a processor and a communications interface, the communications interface is coupled to the processor, and the processor is configured to run a program or an instruction to implement the processes of the foregoing one-hand control method embodiment for a touchscreen, and a same technical effect can be achieved. To avoid repetition, details are not described herein again.

It should be understood that the chip mentioned in this embodiment of this application may also be referred to as a system-level chip, a system chip, a chip system, or a system on chip.

An embodiment of this application provides a computer program product. The program product is stored in a storage medium. The program product is executed by at least one processor to implement the processes of the foregoing one-hand control method embodiment for a touchscreen, and a same technical effect can be achieved. To avoid repetition, details are not described herein again.

It should be noted that, in this specification, the term "include", "comprise", or any other variant thereof is intended to cover a non-exclusive inclusion, so that a process, a method, an article, or an apparatus that includes a list of elements not only includes those elements but also includes other elements which are not expressly listed, or further includes elements inherent to such process, method, article, or apparatus. In absence of more constraints, an element preceded by a statement "includes a..." does not preclude the presence of additional identical elements in the process, method, article, or apparatus that includes the element. In addition, it should be noted that the scope of the methods and apparatuses in the embodiments of this application is not limited to performing functions in the order shown or discussed, but may also include performing the functions in a basically simultaneous manner or in opposite order based on the functions involved. For example, the described methods may be performed in a different order from the described order, and various steps may be added, omitted, or combined. In addition, features described with reference to some examples may be combined in other examples.

Based on the descriptions of the foregoing implementations, a person skilled in the art may clearly understand that the method in the foregoing embodiment may be implemented by software in addition to a necessary universal hardware platform or by hardware only. In most circumstances, the former is a preferred implementation. Based on such an understanding, the technical solutions of this application essentially or the part contributing to the prior art may be implemented in a form of a computer software product. The computer software product is stored in a storage medium (for example, a ROM/RAM, a magnetic disk, or an optical disc), and includes several instructions for instructing a terminal (which may be a mobile phone, a computer, a server, a network device, or the like) to perform the methods described in the embodiments of this application.

The embodiments of this application are described above with reference to the accompanying drawings, but this application is not limited to the above specific implementations, and the above specific implementations are only illustrative and not restrictive. Under the enlightenment of this application, those of ordinary skill in the art can make many forms without departing from the purpose of this application and the protection scope of the claims, all of which fall within the protection of this application.

## Claims

1. A one-hand control method for a touchscreen, comprising:
receiving a first input from a hand of a user on a first touch region; and
performing target processing on a target object in a target interface based on a processing parameter corresponding to an input parameter of the first input, wherein
the input parameter comprises an input parameter for a holding part of the hand.

2. The one-hand control method for a touchscreen according to claim 1, wherein
the input parameter of the first input comprises a moving track of the holding part of the hand in the first touch region.

3. The one-hand control method for a touchscreen according to claim 2, wherein the processing parameter comprises a downscaling direction of the target interface or a moving direction of the target interface;
the performing target processing on a target object in a target interface based on a processing parameter corresponding to an input parameter of the first input comprises:
scaling down the target interface along the downscaling direction or moving the target interface along the moving direction, so that at least part of the target interface is located in a second touch region; and
an area of the first touch region is smaller than an area of the second touch region.

4. The one-hand control method for a touchscreen according to claim 3, wherein the processing parameter further comprises target content in the target interface and a target position corresponding to the target content; and
the scaling down the target interface along the downscaling direction or moving the target interface along the moving direction, so that at least part of the target interface is located in a second touch region comprises:
scaling down the target interface along the downscaling direction or moving the target interface along the moving direction, and displaying the target content in the target interface at a target position of the second touch region.

5. The one-hand control method for a touchscreen according to claim 4, wherein before the displaying the target content in the target interface at a target position of the second touch region, the method further comprises:
filtering the target content out from a plurality of pieces of first content in the target interface based on the moving track, wherein
the plurality of pieces of first content are displayed outside the second touch region.

6. The one-hand control method for a touchscreen according to claim 4, wherein in a case of a plurality of pieces of target content, the displaying the target content in the target interface at a target position of the second touch region comprises:
determining a display order of the pieces of target content based on the input parameter of the first input; and
displaying the pieces of target content at the target position of the second touch region in sequence based on the display order.

7. The one-hand control method for a touchscreen according to claim 6, wherein
the display order is associated with historical big data of the pieces of target content.

8. The one-hand control method for a touchscreen according to any one of claims 3 to 7, wherein after the displaying the target content in the target interface at a target position of the second touch region, the method further comprises:
in a case that a second input for the target content is received, based on a content type of the target content, controlling the target interface to restore display in an initial display region or controlling the target interface to remain in a current display region.

9. The one-hand control method for a touchscreen according to claim 8, wherein based on the content type of the target content, the controlling the target interface to restore display in an initial display region or controlling the target interface to remain in a current display region comprises:
controlling the target interface to restore display in the initial display region in a case that the target content is a first type of content, wherein the first type of content is able to respond to a single operation input; and
controlling the target interface to remain in the current display region in a case that the target content is a second type of content, wherein the second type of content is able to respond to a plurality of times of operation input.

10. A one-hand control apparatus for a touchscreen, comprising:
a receiving module, configured to receive a first input from a hand of a user on a first touch region; and
an execution module, configured to perform target processing on a target object in a target interface based on a processing parameter corresponding to an input parameter of the first input, wherein
the input parameter comprises an input parameter for a holding part of the hand.

11. The one-hand control apparatus for a touchscreen according to claim 10, wherein
the input parameter of the first input comprises a moving track of the holding part of the hand in the first touch region.

12. The one-hand control apparatus for a touchscreen according to claim 11, wherein the processing parameter comprises a downscaling direction of the target interface or a moving direction of the target interface; and
the execution module is further configured to: scale down the target interface along the downscaling direction or move the target interface along the moving direction, so that at least part of the target interface is located in a second touch region.

13. The one-hand control apparatus for a touchscreen according to claim 12, wherein the processing parameter further comprises target content in the target interface and a target position corresponding to the target content, and the control apparatus further comprises:
a display module, configured to: scale down the target interface along the downscaling direction or move the target interface along the moving direction, and display the target content in the target interface at a target position of the second touch region, wherein
an area of the first touch region is smaller than an area of the second touch region.

14. The one-hand control apparatus for a touchscreen according to claim 13, further comprising:
a filtering module, configured to filter the target content out from a plurality of pieces of first content in the target interface based on the moving track, wherein
the plurality of pieces of first content are displayed outside the second touch region.

15. The one-hand control apparatus for a touchscreen according to claim 13, further comprising:
a determining module, configured to determine a display order of the pieces of target content based on the input parameter of the first input, wherein
the display module is further configured to display the pieces of target content at the target position of the second touch region in sequence based on the display order.

16. The one-hand control apparatus for a touchscreen according to claim 15, wherein
the display order is associated with historical big data of the pieces of target content.

17. The one-hand control apparatus for a touchscreen according to any one of claims 12 to 16, further comprising:
a control module, configured to: in a case that a second input for the target content is received, based on a content type of the target content, control the target interface to restore display in an initial display region or control the target interface to remain in a current display region.

18. The one-hand control apparatus for a touchscreen according to claim 17, wherein
the control module is further configured to control the target interface to restore display in the initial display region in a case that the target content is a first type of content, wherein the first type of content is able to respond to a single operation input; and
the control module is further configured to control the target interface to remain in the current display region in a case that the target content is a second type of content, wherein the second type of content is able to respond to a plurality of times of operation input.

19. An electronic device, comprising a processor, a memory, and a program or an instruction stored in the memory and executable on the processor, wherein when the program or the instruction is executed by the processor, steps of the one-hand control method for a touchscreen according to any one of claims 1 to 9 are implemented.

20. A readable storage medium, wherein the readable storage medium stores a program or an instruction, and when the program or the instruction is executed by a processor, steps of the one-hand control method for a touchscreen according to any one of claims 1 to 9 are implemented.

21. A chip, wherein the chip comprises a processor and a communications interface, the communications interface is coupled to the processor, and the processor is configured to run a program or an instruction to implement the steps of the one-hand control method for a touchscreen according to any one of claims 1 to 9.

22. A computer program product, wherein the computer program product is executed by at least one processor to implement the steps of the one-hand control method for a touchscreen according to any one of claims 1 to 9.

23. An electronic device, configured to implement the steps of the one-hand control method for a touchscreen according to any one of claims 1 to 9.
